# EUROPEAN PATENT APPLICATION

(11) **EP 3 135 940 A1**
(43) Date of publication of application: **01.03.2017**
(21) Application number: 16181250.8
(22) Date of filing: 26.07.2016
(51) Int. Cl.: F16D 3/68

(54) **SHAFT COUPLING STRUCTURE AND ELECTRIC POWER STEERING SYSTEM**

(30) Priority: 07.08.2015 JP 2015157391
(71) Applicant: JTEKT Corporation, Chuo-ku, Osaka-shi Osaka 542-8502 (JP)
(72) Inventor: KIKUCHI, Arata, Osaka-shi,, Osaka 542-8502 (JP); KAWAMURA, Naofumi, Osaka-shi,, Osaka 542-8502 (JP); KAWASOKO, Naoji, Osaka-shi,, Osaka 542-8502 (JP)
(74) Representative: Winter, Brandl, Fürniss, Hübner, Röss, Kaiser, Polte - Partnerschaft mbB

(57) **Abstract**

A shaft coupling structure includes a rotating shaft (14), a worm shaft (18), a first member (50), a second member (60), and an intermediate member (70) that is an elastic member. The intermediate member is interposed between the first member and the second member. Coupling protrusions (52) of the first member that extend in an axial direction are each inserted between second radial protrusions of the intermediate member and between a plurality of first radial protrusions of the second member. Protruding portions of the first radial protrusions engage with the corresponding recessed portions of the second radial protrusions in the axial direction. When a relative rotation angle between the first member and the second member is smaller than a predetermined angle, ends of each of the second radial protrusions in a circumferential direction each projects in the circumferential direction with respect to a corresponding end of the corresponding first radial protrusion in the circumferential direction.

## Description

### BACKGROUND OF THE INVENTION

### 1. Field of the Invention

The invention relates to a shaft coupling mechanism and an electric power steering system.

### 2. Description of the Related Art

In general, in an electric power steering system, an assist torque is applied to a steering shaft by transmitting output rotation of an electric motor to an input gear of a reduction gear and transmitting rotation of an output gear of the reduction gear to the steering shaft. A rotating shaft of the electric motor and the input gear (for example, a worm shaft) of the reduction gear are coupled together via a shaft coupling structure. Japanese Patent Application Publication No. 2006-183676 (JP 2006-183676 A) proposes a shaft coupling structure including a pair of coupling bases, a pair of rotation transmitting members, and an interposition member. The coupling bases are coupled to a pair of rotating shafts. The rotation transmitting members are arranged between the coupling bases. The interposition member is an elastic member arranged between the rotation transmitting members.

During torque transmission, when protruding portions of the interposition member is compressively deformed by a given amount or more, corresponding side surfaces of protruding portions of the rotation transmitting members come into contact with each other. Consequently, the protruding portions of the interposition member are restrained from being further compressively deformed, and thus, the protruding portions of the interposition member (elastic member) is restrained from being worn away.

However, in JP 2006-183676 A, the shaft coupling structure includes five members and thus has a large number of components.

### SUMMARY OF THE INVENTION

An object of the invention is to provide a shaft coupling structure and an electric power steering system that enable a reduction in the number of components while maintaining a function to restrain an elastic member from being worn away.

In an aspect of the invention, a shaft coupling structure includes a first shaft and a second shaft that face each other in an axial direction to transmit a rotational force acting in a circumferential direction, a first member that includes a plurality of coupling protrusions extending toward the second shaft in the axial direction and spaced from one another in the circumferential direction and that is coupled to the first shaft, a second member including a plurality of first radial protrusions extending radially and each having a first surface that faces the first shaft and on which a first protruding or recessed portion protruding or recessed in the axial direction is formed, the coupling protrusions each inserted between the corresponding first radial protrusions, the second member coupled to the second shaft, and an intermediate member including a plurality of second radial protrusions extending radially and having a second surface that faces the second shaft and on which a second protruding or recessed portion protruding or recessed in the axial direction is formed such that a recess or protrusion of the second protruding or recessed portion engage with a protrusion or recess, respectively, of the corresponding first protruding or recessed portion in the axial direction, the coupling protrusions each inserted between the corresponding second radial protrusions, the intermediate member being an elastic member interposed between the first member and the second member , wherein
when a relative rotation angle between the first member and the second member is smaller than a predetermined angle, a pair of ends of each of the second radial protrusions in the circumferential direction each projects in the circumferential direction with respect to a corresponding end of a corresponding first radial protrusion in the circumferential direction.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram depicting a general configuration of an electric power steering system including a shaft coupling structure in a first embodiment of the invention;
FIG. 2 is a sectional view of an important part of the electric power steering system in the first embodiment;
FIG. 3 is an exploded perspective view of a shaft coupling structure in the first embodiment;
FIG. 4 is a sectional view of the shaft coupling structure in the first embodiment in a direction perpendicular to an axial direction;
FIG. 5A is a sectional view of an important part of the shaft coupling structure in a circumferential direction in a state where a relative rotation angle between a first member and a second member is smaller than a predetermined angle in the first embodiment;
FIG. 5B is a sectional view of an important part of the shaft coupling structure in the circumferential direction in a state where a torque is transmitted in a first rotating direction and where the relative rotation angle between the first member and the second member is equal to the predetermined angle in the first embodiment;
FIG. 5C is a sectional view of an important part of the shaft coupling structure in the circumferential direction in a state where a torque is transmitted in a second rotating direction and where the relative rotation angle between the first member and the second member is equal to the predetermined angle in the first embodiment;
FIG. 6 is a sectional view of an important part of a shaft coupling structure in the circumferential direction in a second embodiment of the invention;
FIG. 7 is a sectional view of an important part of a shaft coupling structure in the circumferential direction in a third embodiment of the invention;
FIG. 8 is a schematic sectional view of a joining structure that is included in a shaft coupling structure in a fourth embodiment of the invention and in which the second member and a worm shaft are jointed together; and
FIG. 9 is an exploded perspective view of an intermediate member and an axial biasing member in a shaft coupling structure in a fifth embodiment of the invention

### DETAILED DESCRIPTION OF EMBODIMENTS

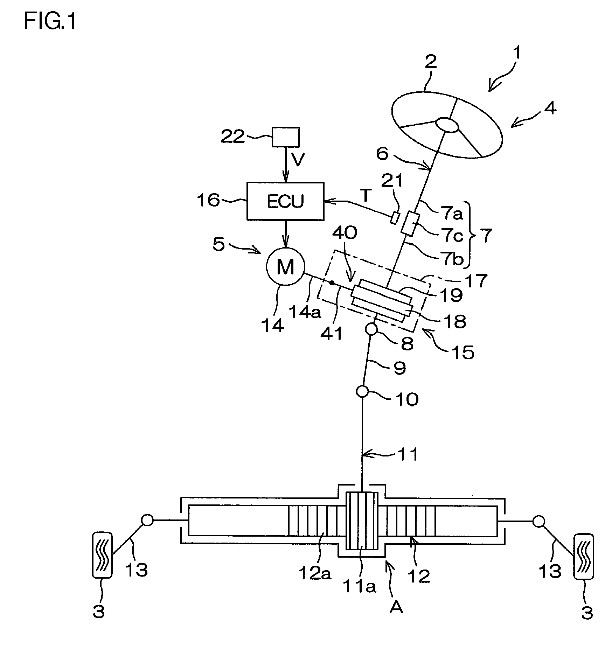

An electric power steering system including a shaft coupling structure in a first embodiment of the invention will be described in brief using FIG. 1. FIG. 1 is a schematic diagram depicting a general configuration of the electric power steering system including the shaft coupling structure in the first embodiment of the invention. An electric power steering system 1 includes a steering mechanism 4 and a steering operation mechanism A to steer steered wheels 3 based on a driver's operation of a steering wheel 2 (steering member). The steering mechanism 4 includes an assist mechanism 5 that assists the driver's steering operation.

The steering mechanism 4 includes a steering shaft 6. The steering shaft 6 includes a column shaft 7, an intermediate shaft 9, and a pinion shaft 11. The column shaft 7 has an input shaft 7a, an output shaft 7b, and a torsion bar 7c. The input shaft 7a is coupled to the steering wheel 2 (steering member). The output shaft 7b is coupled to the input shaft 7a via the torsion bar 7c. The intermediate shaft 9 is coupled via a universal joint 8 to the pinion shaft 11, which has a pinion 11a.

The steering operation mechanism A has a rack shaft 12 and tie rods 13. The rack shaft 12 has a rack 12a meshed with the pinion 11a. Each of the tie rods 13 is coupled to the rack shaft 12 at its one end and to the corresponding steered wheel 3 at the other end. When the steering wheel 2 rotates in accordance with the driver's operation of the steering wheel 2, the pinion shaft 11 rotates via the input shaft 7a, the output shaft 7b, and the intermediate shaft 9. Rotation of the pinion shaft 11 is converted into reciprocating motion of the rack shaft 12 in an axial direction by the steering operation mechanism A. The reciprocating motion of the rack shaft 12 in the axial direction varies the steered angle of the steered wheels 3.

The assist mechanism 5 has a torque sensor 21, an electronic control unit (ECU) 16, an electric motor 14, a power transmission joint 41, and a worm reduction gear 15. The torque sensor 21 detects the amount of torsion between the input shaft 7a and the output shaft 7b. The ECU 16 determines an assist torque based on a steering torque and a vehicle speed. The steering torque is derived from the amount of torsion detected by the torque sensor 21. The vehicle speed is detected by a vehicle speed sensor 22. The electric motor 14 is controlled by the ECU 16 to be driven.

The power transmission joint 41 couples a rotating shaft 14a (first shaft) of the electric motor 14 to a worm shaft 18 (second shaft) that is an input shaft of the worm reduction gear 15. A shaft coupling structure 40 in the present embodiment includes the rotating shaft 14a that is the first shaft, the worm shaft 18 that is the second shaft, and the power transmission joint 41. Rotation output from the electric motor 14 is transmitted to the worm reduction gear 15 via the power transmission joint 41. The worm reduction gear 15 transmits a rotational force of the electric motor 14 to the output shaft 7b. As a result, the assist torque is applied to the output shaft 7b to assist the driver's steering operation.

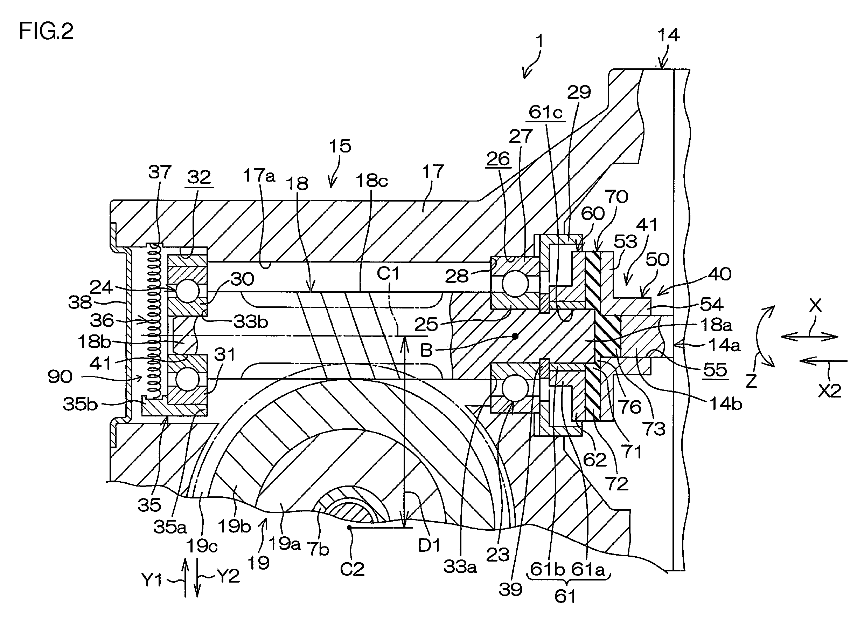

The shaft coupling structure 40 according to the first embodiment of the invention and a peripheral structure thereof will be described using FIG. 2. FIG. 2 is a sectional view of an important part of the electric power steering system 1 including the shaft coupling structure 40 in the first embodiment of the invention. As depicted in FIG. 2, the worm reduction gear 15 has a housing 17, a worm shaft 18, a first bearing 23, a second bearing 24, a worm wheel 19, and a biasing portion 90. The worm shaft 18, the first bearing 23, the second bearing 24, the worm wheel 19, and the biasing portion 90 are housed in the housing 17.

The worm shaft 18 has a first end 18a and a second end 18b separated from each other in the axial direction and a tooth portion 18c that is an intermediate portion between the first end 18a and the second end 18b. The worm shaft 18 is housed in a housing portion 17a of the housing 17. The worm shaft 18 (second shaft) is arranged coaxially with the rotating shaft 14a of the electric motor 14 (first shaft). The first end 18a of the worm shaft 18 faces an end 14b of the rotating shaft 14a of the electric motor 14 in the axial direction X.

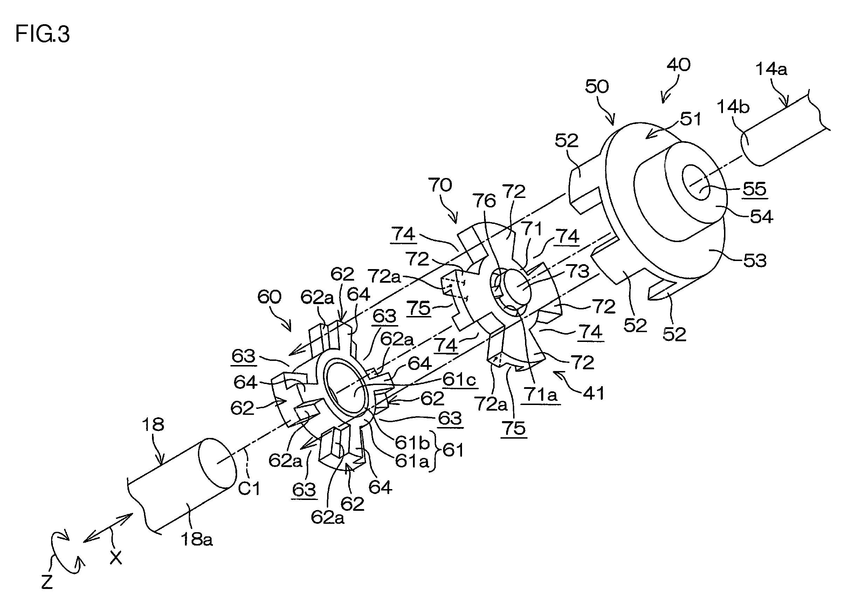

In the shaft coupling structure 40, the end 14b of the rotating shaft 14a of the electric motor 14 is coupled to the first end 18a of the worm shaft 18 via the power transmission joint 41 so as to be able to transmit torque to and from the first end 18a. The shaft coupling structure 40 has a function to transmit rotation of the rotating shaft 14a in a circumferential direction Z to the worm shaft 18. FIG. 3 is an exploded perspective view of the shaft coupling structure 40.

As depicted in FIG. 2 and FIG. 3, in the shaft coupling structure 40, the power transmission joint 41 has a first member 50, a second member 60, and an intermediate member 70. The first member 50 is fixed to the end 14b of the rotating shaft 14a of the electric motor 14 so as to be rotatable integrally with the end 14b. The second member 60 is fixed to the first end 18a of the worm shaft 18 so as to be rotatable integrally with the first end 18a. The intermediate member 70 is interposed between the first member 50 and the second member 60.

The first member 50 includes an annular main body 51 and a plurality of coupling protrusions 52. The first member 50 is formed of, for example, a metal material. The main body 51 is fixed to the rotating shaft 14a of the electric motor 14 so as to be rotatable integrally with the rotating shaft 14a. The main body 51 includes an annular plate 53 and a boss 54. The boss 54 is a tubular protrusion extending in the axial direction. The first member 50 has a central hole 55 that penetrates the annular plate 53 and the boss 54. The end 14b of the rotating shaft 14a is press-fitted in the central hole 55 in the first member 50. For example, the end 14b of the rotating shaft 14a may be serration-fitted in the central hole 55 in the first member 50.

As depicted in FIG. 3, the coupling protrusions 52 protrude from the annular plate 53 of the main body 51 toward the worm shaft 18 in the axial direction X. The coupling protrusions 52 are arranged at intervals in a rotating direction (corresponding to the circumferential direction Z). As depicted in FIG. 2 and FIG. 3, the second member 60 includes an annular main body 61 and a plurality of first radial protrusions 62.

The main body 61 includes a resin portion 61a and a metal ring 61b. The resin portion 61a is annular so as to surround the first end 18a of the worm shaft 18. The resin portion 61a is formed integrally with the first radial protrusions 62. The metal ring 61b is attached to the resin portion 61a by insert molding. The metal ring 61b defines a fitting hole 61c for the first end 18a of the worm shaft 18.

The first end 18a of the worm shaft 18 is press-fitted into the fitting hole 61c in the metal ring 61b. For example, the first end 18a of the worm shaft 18 may be serration-fitted into the fitting hole 61c. As depicted in FIG. 3, the first radial protrusions 62 extend radially outward from the main body 61 and are spaced from one another at regular intervals in the rotating direction (circumferential direction Z). First cutouts 63 are each formed between the corresponding two first radial protrusions 62 adjacent to each other in the rotating direction (circumferential direction Z), such that the coupling protrusions 52 are each inserted through the corresponding first cutout 63. The first radial protrusions 62 are formed of resin integrally with the resin portion 61a of the main body 61.

Each of the first radial protrusions 62 includes a first surface 62a that is a surface facing the intermediate member 70. The first surface 62a is provided with a protruding portion 64 that is a first protruding or recessed portion that protrudes or is recessed in the axial direction X. The protruding portion 64 (first protruding or recessed portion) protrudes from the first surface 62a toward the intermediate member 70 in the axial direction X. The protruding portion 64 is arranged in a central portion of the first surface 62a in the rotating direction (circumferential direction Z). The intermediate member 70 includes an annular main body 71, a plurality of second radial protrusions 72, and an axially biasing portion 73. The intermediate member 70 is formed of an elastic member, for example, rubber or resin. The resin of the second member 60 (the resin portion 61a of the main body 61 and the first radial protrusions 62) is harder than the resin of the intermediate member 70.

The second radial protrusions 72 extend radially outward from the main body 71 and are spaced from one another at regular intervals in the rotating direction (circumferential direction Z). Second cutouts 74 are each formed between corresponding two radial protrusions 72 adjacent to each other in the rotating direction (circumferential direction Z), such that the coupling protrusions 52 are each inserted through the corresponding second cutout 74. Each of the second cutouts 74 is smaller than each of the first cutouts 63 in width in the circumferential direction Z.

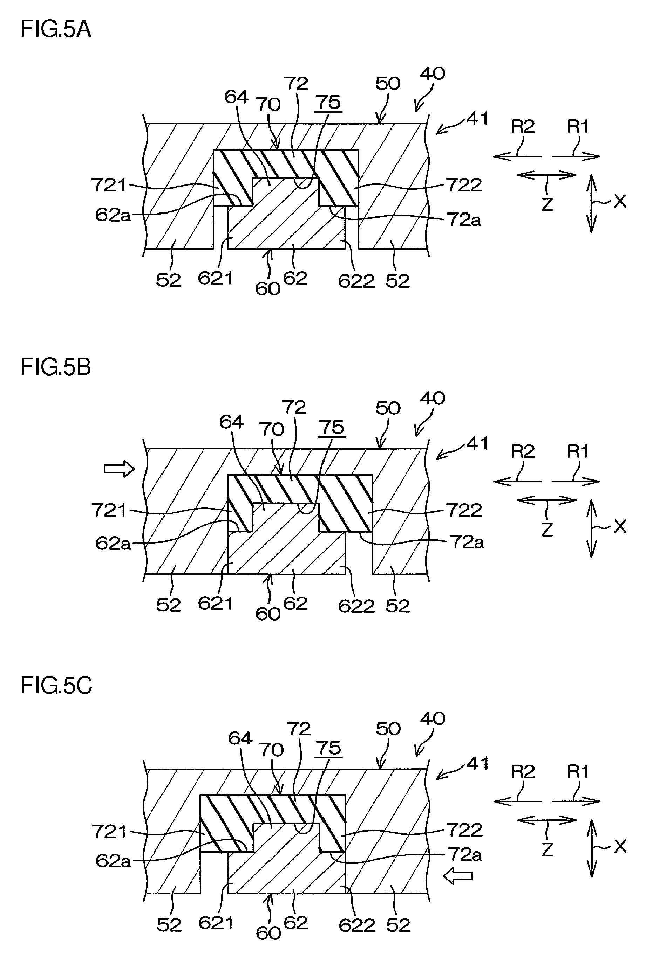

Each of the second radial protrusions 72 includes a second surface 72a that is a surface facing the corresponding first radial protrusion 62. The second surface 72a is provided with a recessed portion 75 that is a second protruding or recessed portion recessed in the axial direction X. The protruding portions 64 (first protruding or recessed portions) of the first radial protrusions 62 engage with the respective recessed portions 75 (second protruding or recessed portions) of the second radial protrusions 72 in the axial direction X (see FIG. 5A that is a sectional view of the shaft coupling structure 40 in the circumferential direction Z). Consequently, the protruding portions 64 and the recessed portions 75 can rotate integrally with one another in the rotating direction.

As depicted in FIG. 2 and FIG. 3, the axially biasing portion 73 is a columnar member. A part of the axially biasing portion 73 is arranged concentrically with a central hole 71 a in the main body 71. This part of the axially biasing portion 73 and an inner surface of the central hole 71a are coupled together via a plurality of arm-like coupling protrusions 76 extending radially in the radial direction. The remaining part of the axially biasing portion 73 protrudes from the central hole 71a toward the rotating shaft 14a and is fitted into the central hole 55 in the first member 50.

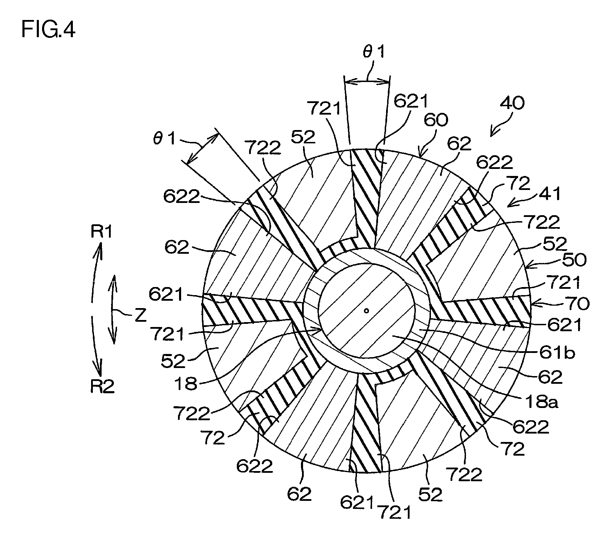

As depicted in FIG. 2, the axially biasing portion 73 is elastically compressed in the axial direction X between an end surface of the end 14b of the rotating shaft 14a and an end surface of the first end 18a of the worm shaft 18. The axially biasing portion 73 elastically biases the worm shaft 18 in the axial direction X. FIG. 4 is a sectional view of an important part of the shaft coupling structure 40 in a direction perpendicular to the axial direction. FIG. 5A, FIG. 5B, and FIG. 5C are sectional views of the shaft coupling structure 40 in the circumferential direction Z. FIG. 4 illustrates a non-steering state (a state where no torque is transmitted through the rotating shaft 14a).

FIG. 5A illustrates a state where a torque lower than a predetermined torque is transmitted through the rotating shaft 14a. FIG. 5B and FIG. 5C illustrate a state where a torque equal to or higher than the predetermined torque is transmitted through the rotating shaft 14a and where a relative rotation angle between the first member 50 and the second member 60 is equal to a predetermined angle θ1 (see FIG. 4). The predetermined angle θ1 is a rotation angle in a first rotating direction R1 or a second rotating direction R2 with reference to a rotational position of the first member 50 with respect to the second member 60 in the non-steering state.

In a state where no torque is transmitted through the rotating shaft 14a as depicted in FIG. 4 and in a state, as depicted in FIG. 5A, where a torque lower than the predetermined torque is transmitted through the rotating shaft 14a and where the relative rotation angle between the first member 50 and the second member 60 is smaller than the predetermined angle θ1, a pair of ends 721 and 722 of each of the second radial protrusions 72 in the circumferential direction Z (first rotating direction R1 and second rotating direction R2) protrude from respective corresponding circumferential ends 621 and 622 of the corresponding first radial protrusion 62 in the circumferential direction Z.

Each of the second radial protrusions 72 is larger than each of the first radial protrusions 62 in the width in the circumferential direction Z. The intermediate member 70 is formed of an elastic member. Thus, the second member 60 is configured to be able to swing in the first rotating direction R1 and the second rotating direction R2 (circumferential direction Z) with respect to the first member 50 while the relative rotation angle between the first member 50 and the second member 60 is smaller than the predetermined angle θ1. That is, while the relative rotation angle between the first member 50 and the second member 60 is smaller than the predetermined angle θ1, the worm shaft 18 is elastically coupled to the rotating shaft 14a of the electric motor 14 so as to be able to swing with respect to the rotating shaft 14a.

Thus, impact made when the rotating direction of the electric motor 14 is reversed is absorbed by elastic compressive deformation of the intermediate member 70 (the ends 721 and 722 of the second radial protrusions 72 in the circumferential direction Z) in the rotating direction. Consequently, impact made at the time of the reversal is restrained from being transmitted to the steering wheel 2 via the worm shaft 18, the worm wheel 19, and the column shaft 7. Therefore, steering feeling is improved.

When a torque equal to or larger than the predetermined torque is transmitted through the rotating shaft 14a of the electric motor 14, the relative rotation angle between the first member 50 and the second member 60 is equal to the predetermined angle θ1. That is, as depicted in FIG. 5B and FIG. 5C, the end 721 or 722 of the intermediate member 70 in the circumferential direction Z corresponding to the rotating direction R1 or R2 is elastically compressed. Consequently, each of the coupling protrusions 52 of the first member 50 comes into abutting contact with the corresponding end 621 or 622 of the corresponding first radial protrusion 62 of the second member 60 in the circumferential direction.

Thus, the torque transmitted through the rotating shaft 14a is transmitted to the worm shaft 18 via the coupling protrusions 52 of the first member 50 and the first radial protrusions 62 of the second member 60. Torque equal to or higher than the predetermined torque is not loaded on the intermediate member 70 that is formed of the elastic member. Therefore, in the intermediate member 70, durability deterioration such as wear of the ends 721 and 722 can be restrained.

As seen in FIG. 2 again, the worm wheel 19 has a core portion 19a and a tooth portion 19b. The core portion 19a is formed of, for example, a metal material and is annularly shaped. The core portion 19a is fitted over an outer periphery of the output shaft 7b so as to rotate integrally with the output shaft 7b. The tooth portion 19b is formed of, for example, a resin material and is annularly shaped. The invention is not limited to the electric power steering system of a column assist type in the present embodiment, in which the torque of the electric motor 14 is applied to the output shaft 7b, located on an upstream side of the pinion shaft 11. For example, the invention may adopt the electric power steering system of a pinion assist type, in which the torque of the electric motor 14 is applied to the pinion shaft 11. In this case, the worm wheel 19 is fixed to the pinion shaft 11.

The tooth portion 19b is fitted over an outer periphery of the core portion 19a so as to rotate integrally with the core portion 19a. Teeth 19c are formed on an outer peripheral surface of the tooth portion 19b so as to mesh with teeth of the tooth portion 18c of the worm shaft 18. The first bearing 23 is, for example, a rolling bearing. The first bearing 23 has an inner ring 25, an outer ring 27, and a plurality of rolling elements. The inner ring 25 is fitted over an outer periphery of the first end 18a of the worm shaft 18 so as to rotate integrally with the worm shaft 18. The inner ring 25 is sandwiched, in the axial direction X, between a snap ring 39 fitted in an outer peripheral groove in the worm shaft 18 and a positioning step portion 33a on an outer periphery of the worm shaft 18.

The outer ring 27 is fitted in a bearing hole 26 formed in the housing 17. The outer ring 27 is sandwiched, in the axial direction, between a positioning step portion 28 at an end of the bearing hole 26 and a locking member 29 screw-threaded in the bearing hole 26. The first bearing 23 has an internal clearance. In the present embodiment, the intermediate member 70 of the shaft coupling structure 40 is formed of an elastic member, and a small clearance is set between each of the rolling elements and each of the inner ring 25 and the outer ring 27. Thus, the worm shaft 18 is supported so as to be able to swing with respect to the housing 17 using a center B of the first bearing 23 as a support.

The axially biasing portion 73 of the shaft coupling structure 40 biases the worm shaft 18 in the axial direction X. The axially biasing portion 73 suppresses backlash of the worm shaft 18 in the axial direction X resulting from the internal clearance in the first bearing, to reduce rattle caused by the possible backlash. The second bearing is, for example, a rolling bearing. The second bearing has an inner ring 30, an outer ring 31, and a plurality of rolling elements. The second bearing 24 is housed in a holding hole 32 in the housing 17. The inner ring 30 is fitted over the second end 18b of the worm shaft 18 so as to rotate integrally with the worm shaft 18. One end surface of the inner ring 30 is in abutting contact with a positioning step portion 33b formed at the second end 18b of the worm shaft 18.

The biasing portion 90 has a bearing holder 35 on which a spring seat portion 35b is provided and a compression coil spring 36 serving as a biasing member. The bearing holder 35 includes a main body 35a fitted over the outer ring 31 of the second bearing 24 to hold the outer ring 31. The spring seat portion 35b protrudes from the main body 35a axially outward X2 of the worm shaft 18 (toward a side opposite from the rotating shaft 14a).

The compression coil spring 36 is arranged axially outward X2 of the worm shaft 18. The compression coil spring 36 is interposed between a spring seat portion 37 formed in the housing 17 and the spring seat portion 35b of the bearing holder 35. To make the worm shaft 18 closer to the worm wheel 19, the compression coil spring 36 biases the second end 18b of the worm shaft 18 toward the worm wheel 19 via the spring seat portion 35b and the second bearing 24 with respect to the housing 17 using the center B of the first bearing 23 as a support.

The holding hole 32 in the housing 17 holds the second bearing 24 via the bearing holder 35. The bearing holder 35 and the compression coil spring 36 are housed in the holding hole 32 along with the second end 18b of the worm shaft 18 and the second bearing 24. An axially outward end of the holding hole 32 is closed with a cover member 38. The holding hole 32 is formed as a biasing hole to hold the bearing holder 35 so that the second end 18b of the worm shaft 18 is movable in a first direction Y1 and a second direction Y2. The first direction Y1 is a direction in which a center-to-center distance D1 between the worm shaft 18 and the worm wheel 19 increases. The second direction Y2 is a direction in which the center-to-center distance D1 between the worm shaft 18 and the worm wheel 19 decreases. The second direction Y2 corresponds to a biasing direction in which the compression coil spring 36 biases the spring seat portion 37. The first direction corresponds to a direction opposite to the biasing direction of the compression coil spring 36.

The bearing holder 35 may be omitted from the biasing portion 90, and the spring seat portion 35b may be integrated with the outer ring 31. In this case, the outer ring 31 of the second bearing 24 is held directly by the holding hole 32. In the present embodiment, when the relative rotation angle θ between the first member 50 and the second member 60 reaches the predetermined angle θ1, the coupling protrusions 52 of the first member 50 come into abutting contact with the respective first radial protrusions 62 of the second member 60. This suppresses compressive deformation of the ends 721 and 722 of the second radial protrusions 72 of the intermediate member 70 in the circumferential direction Z. The first member 50, the second member 60, and the intermediate member 70 formed of the elastic member can form the shaft coupling structure 40. This enables a reduction in the number of components of the shaft coupling structure 40 while maintaining a function to restrain the elastic member (intermediate member 70) from being worn away.

The second shaft (worm shaft 18) is spline-fitted in the fitting hole 61c in the second member 60. This enables a reduction in the axial length of a fitting portion between the second shaft (worm shaft 18) and the fitting hole 61c. Consequently, the shaft coupling structure 40 can be downsized in the axial direction X. Thus, the biasing portion 90 can be easily provided with an arrangement space for the compression coil spring 36 that is arranged axially outward X2 of the worm shaft 18.

The second member 60 contains resin, restraining a possible rattle between the first member 50 and the second member 60. Specifically, a possible rattle is restrained between the coupling protrusions 52 of the first member 50 and the first radial protrusions 62 of the second member 60. The second shaft (worm shaft 18) is fitted into the metal ring 61b attached to the resin portion 61a of the second member 60 by insert molding. Thus, the coupling strength between the second shaft (worm shaft 18) and the second member 60 is enhanced.

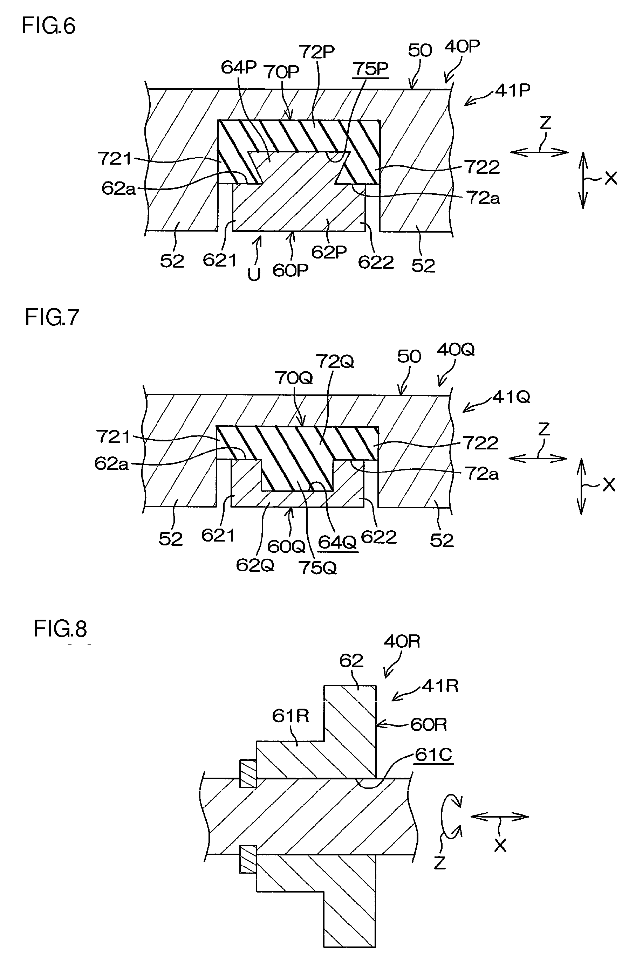

The axially biasing portion 73 integrated with the intermediate member 70 into a single member biases the second shaft (worm shaft 18) in the axial direction X. Compared to a configuration in which the axially biasing portion is provided separately from the intermediate member 70, the present configuration enables a reduction in the number of components. This enables a reduction in the number of components of the electric power steering system 1 including the shaft coupling structure 40. FIG. 6 is a schematic sectional view of an important part of a shaft coupling structure 40P in a second embodiment of the invention.

The shaft coupling structure 40P in the second embodiment of the invention is different from the shaft coupling structure 40 in the first embodiment in FIG. 5A mainly as follows. That is, in a power transmission joint 41P of the shaft coupling structure 40, a second member 60P and an intermediate member 70P are molded together by two-shot molding. The second member 60P is formed of a resin harder than the resin of the intermediate member 70P. Protruding portions 64P (first protruding or recessed portions) of first radial protrusions 62P of the second member 60P are each formed to have a trapezoidal sectional shape such that the width of the protruding portion 64P in the circumferential direction Z increases toward a tip of the protruding portion 64P. Recessed portions 75P (second protruding or recessed portions) of second radial protrusions 72P of the intermediate member 70P are formed to have a sectional shape conforming to the sectional shape of the protruding portion 64.

The protruding portions 64P and the recessed portions 75P are joined together as in the case of wedging such that the second member 60P and the intermediate member 70P form an integral unit U. Components of the second embodiment in FIG. 6 that are the same as the corresponding components of the first embodiment in FIG. 5A are denoted by the same reference numerals as those of the components of the first embodiment in FIG. 5A. The present embodiment can produce the same effects as those of the first embodiment. Moreover, the second member 60P and the intermediate member 70P can be handled as the integral unit U. This enables a reduction in assembly man-hours needed to assemble the shaft coupling structure 40P. FIG. 7 is a schematic sectional view of an important part of a shaft coupling structure 40Q in a third embodiment of the invention.

The shaft coupling structure 40Q in the third embodiment in FIG. 7 is different from the shaft coupling structure 40 in the first embodiment in FIG. 5A mainly as follows. In a power transmission joint 41Q of the shaft coupling structure 40Q, recessed portions 64Q that are first protruding or recessed portions are formed in respective first radial protrusions 62Q of a second member 60Q. Protruding portions 75Q that are second protruding or recessed portions are provided on respective second radial protrusions 72Q of an intermediate member 70Q. The recessed portions 64Q engage with the respective protruding portions 75Q in the axial direction.

Components of the third embodiment in FIG. 7 that are the same as the corresponding components of the first embodiment in FIG. 5A are denoted by the same reference numerals as those of the components of the first embodiment in FIG. 5A. The present embodiment can produce the same effects as those of the first embodiment. FIG. 8 is a schematic sectional view depicting a joining structure that is included in a shaft coupling structure 40R in a fourth embodiment of the invention and in which a second member 60R of a power transmission joint 41R is joined to the worm shaft 18.

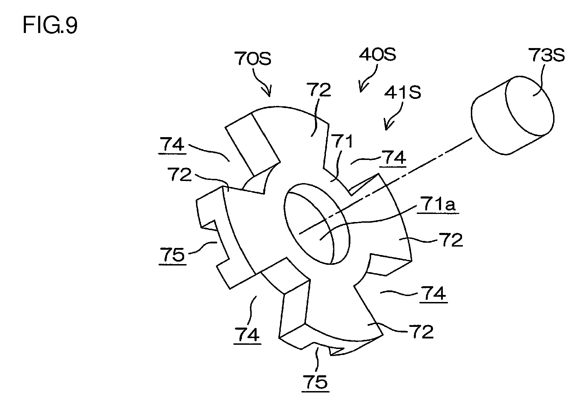

The shaft coupling structure 40R in the fourth embodiment in FIG. 8 is different from the shaft coupling structure 40 in the first embodiment in FIG. 5A mainly in that the metal ring 61b is omitted from the shaft coupling structure 40R and that the second member 60R is formed only of resin. The worm shaft 18 is press-fitted in the fitting hole 61c in a main body 61R of the second member 60R (for example, the worm shaft 18 is serration-fitted in the fitting hole 61c). FIG. 9 is an exploded perspective view of a shaft coupling structure 40S in a fifth embodiment in the invention in which an axially biasing member 73S is disassembled from an intermediate member 70S of a power transmission joint 41S.

The shaft coupling structure 40S in the fifth embodiment in FIG. 9 is different from the shaft coupling structure 40 in the first embodiment in FIG. 3 mainly in that the shaft coupling structure 40S includes the columnar axially biasing member 73S formed separately from the intermediate member 70S. Components of the fifth embodiment in FIG. 9 that are the same as the corresponding components of the first embodiment in FIG. 5A are denoted by the same reference numerals as those of the components of the first embodiment in FIG. 5A. Compared to the related art, the present embodiment enables a reduction in the number of components. The intermediate member 70S and the axially biasing member 73S may be formed of respective materials suitable for the functions thereof. This increases the degree of freedom of material selection.

The invention is not limited to the above-described embodiments. For example, the first member may be coupled to the worm shaft, and the second member may be coupled to the rotating shaft. The shaft coupling structure may be applied to a power transmission system other than the electric power steering system. Various other changes may be made to the invention within the scope of the claims.

## Claims

1. A shaft coupling structure comprising:
a first shaft and a second shaft that face each other in an axial direction to transmit a rotational force acting in a circumferential direction;
a first member that includes a plurality of coupling protrusions extending toward the second shaft in the axial direction and spaced from one another in the circumferential direction and that is coupled to the first shaft;
a second member including a plurality of first radial protrusions extending radially and each having a first surface that faces the first shaft and on which a first protruding or recessed portion protruding or recessed in the axial direction is formed, the coupling protrusions each inserted between the corresponding first radial protrusions, the second member coupled to the second shaft; and
an intermediate member including a plurality of second radial protrusions extending radially and having a second surface that faces the second shaft and on which a second protruding or recessed portion protruding or recessed in the axial direction is formed such that a recess or protrusion of the second protruding or recessed portion engage with a protrusion or recess, respectively, of the corresponding first protruding or recessed portion in the axial direction, the coupling protrusions each inserted between the corresponding second radial protrusions, the intermediate member being an elastic member interposed between the first member and the second member, wherein
when a relative rotation angle between the first member and the second member is smaller than a predetermined angle, a pair of ends of each of the second radial protrusions in the circumferential direction each projects in the circumferential direction with respect to a corresponding end of a corresponding first radial protrusion in the circumferential direction.

2. The shaft coupling structure according to claim 1, wherein the second member includes a fitting hole in which the second shaft is serration-fitted or spline-fitted.

3. The shaft coupling structure according to claim 1 or 2, wherein the second member contains a resin harder than a resin of the intermediate member.

4. The shaft coupling structure according to any one of claims 1 to 3, wherein the second member includes a resin portion and a metal ring that is attached to the resin portion by insert molding and in which the second shaft is fitted.

5. The shaft coupling structure according to any one of claims 1 to 4, wherein the intermediate member includes an axially biasing portion that biases the second shaft in an axial direction.

6. An electric power steering system, which includes the shaft coupling structure according to any one of claims 1 to 5, the electric power steering system comprising:
an electric motor including a rotating shaft serving as the first shaft and a reduction gear including a worm shaft serving as the second shaft.
